(19)

Europäisches
Patentamt
European
Patent Office
Office européen
des brevets

(11)  **EP 3 611 665 A1**

(12)  **EUROPEAN PATENT APPLICATION**

(43) Date of publication:
**19.02.2020  Bulletin 2020/08**

(51) Int Cl.:
**G06K 9/62** (2006.01)

(21) Application number: **18208941.7**

(22) Date of filing: **28.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **17.08.2018   US 201862719210 P**

(71) Applicant: **Siemens Aktiengesellschaft 80333 München (DE)**

(72) Inventors:
• **Planche, Benjamin 81539 München (DE)**
• **Zakharov, Sergey 85614 Kirchseeon (DE)**
• **Hutter, Andreas 81673 München (DE)**
• **Ilic, Slobodan 81547 München (DE)**
• **Wu, Ziyan Princeton, 08540 (US)**

(54)  **MAPPING IMAGES TO THE SYNTHETIC DOMAIN**

(57)  The invention relates to a method for training a generative network which is designed for converting cluttered images into a representation of the synthetic domain. In addition, the invention provides a method for recovering an object from a cluttered image.

FIG 2

**Description**

The invention relates to a method for training a generative network which is designed for converting cluttered images into a representation of the synthetic domain, e.g. normal maps. Such a trained generation network may, for instance, be used for recognizing an object or its properties from a noisy colour image.

The generative network comprises an artificial neural network. Deep convolutional neural networks are particularly suited for this task. The ever-increasing popularity of deep convolutional neural networks seems well-deserved, as they are adopted for more and more complex applications. This success has to be slightly nuanced though, as these methods usually rely on large annotated datasets for their training. In many cases still (e.g. for scalable industrial applications), it would be extremely costly, if not impossible, to gather the required data. For such use-cases and many others, synthetic models representing the target elements are however usually pre-available. Examples of such synthetic models are industrial three-dimensional (3D) computer-aided design (CAD) blueprints, simulation models, etc. It thus became common to leverage such data to train recognition methods e.g. by rendering huge datasets of relevant synthetic images and their annotations.

However, the development of exhaustive, precise models behaving like their real counterparts is often as costly as gathering annotated data (e.g. acquiring precise texture information, to render proper images from CAD data, actually imply capturing and processing images of target objects). As a result, the salient discrepancies between model-based samples and target real ones (known as "realism gap") still heavily impairs the application of synthetically-trained algorithms to real data. Research in domain adaptation thus gained impetus the last years.

Several solutions have been proposed, but most of them require access to real relevant data (even if unlabelled) or access to synthetic models too precise for scalable real-world use-cases (e.g. access to realistic textures for 3D models).

The realism gap is a well-known problem for computer vision methods that rely on synthetic data, as the knowledge acquired on these modalities usually poorly translates to the more complex real domain, resulting in a dramatic accuracy drop. Several ways to tackle this issue have been investigated so far.

A first proposal is to improve the quality and realism of the synthetic models. Several works try to push forward simulation tools for sensing devices and environmental phenomena. State-of-the-art depth sensor simulators work fairly well for instance, as the mechanisms impairing depth scans have been well studied and can be rather well reproduced, as e.g. published by Planche, B., Wu, Z., Ma, K., Sun, S., Kluckner, S., Chen, T., Hutter, A., Zakharov, S., Kosch, H. and Ernst, J.: "DepthSynth: Real-Time Realistic Synthetic Data Generation from CAD Models for 2.5D Recognition", Conference Proceedings of the International Conference on 3D Vision, 2017. In case of colour data however, the problem does not lie in the sensor simulation but in the actual complexity and variability of the colour domain (e.g. sensitivity to lighting conditions, texture changes with wear-and-tear, etc.). This makes it extremely arduous to come up with a satisfactory mapping, unless precise, exhaustive synthetic models are provided (e.g. by capturing realistic textures). Proper modelling of target classes is however often not enough, as recognition methods would also need information on their environment (background, occlusions, etc.) to be applied to real-life scenarios. For this reason, and in complement of simulation tools, recent CNN-based methods are trying to further bridge the realism gap by learning a mapping from rendered to real data, directly in the image domain. Mostly based on unsuper-vised conditional generative adversarial networks (GANs) or style-transfer solutions, these methods still need a set of real samples to learn their mapping.

Other approaches are instead focusing on adapting the recognition methods themselves, to make them more robust to domain changes. There exist, for instance, solutions which are also using unlabelled samples from the target domain along the source data to teach the task-specific method domain-invariant features. Considering real-world and industrial use-cases when only texture-less CAD models are provided, the lack of target domain information may also be compensated by training their recognition algorithms on heavy image augmentations or on a randomized rendering engine. The claim is that with enough variability in the simulator, real data may appear just as another variation to the model.

The objective of the present invention is to provide an alternative concept how to bridge the realism gap. One particular objective of the present invention is to develop a method how to train a generative network to accurately generate a representation of the synthetic domain, e.g. a clean normal map, from a cluttered image.

The overall objective is achieved by the subject-matters of the independent claims. Advantageous embodiments and variations are described in the dependent claims.

The invention provides a method for training a generative network which is designed for converting cluttered images from the real domain into a representation of the synthetic domain. In addition, the invention provides a method for recovering an object from a cluttered image. In the following, first the training method for the generative network is described in detail; subsequently, the method for object recovery is dealt with.

The generation network (note that the terms "generative network" and "generation network" are used interchangeably throughout this patent application) which is designed for converting cluttered images into representations of the synthetic domain comprises an artificial neural network. The method of training the generation network comprises the following steps:

- Receiving a cluttered image as input;
- Extracting a plurality of features from the cluttered image by means of an encoder sub-network;
- Decoding the features into a first modality by means of a first decoder sub-network;
- Decoding the features into at least a second modality, which is different from the first modality, by means of a second decoder sub-network;
- Correlating the first modality and the second modality by means of a distillation sub-network; and
- Returning a representation of the synthetic domain as output.

Notably, the artificial neural network of the generation network is trained by optimizing the encoder sub-network, the first decoder sub-network, the second decoder sub-network and the distillation sub-network together.

Artificial neural networks (ANN) are computing systems vaguely inspired by the biological neural networks that constitute animal brains. Artificial neural networks "learn" to perform tasks by considering examples, generally without being programmed with any task-specific rules.

An ANN is based on a collection of connected units or nodes called artificial neurons which loosely model the neurons in a biological brain. Each connection, like the synapses in a biological brain, can transmit a signal from one artificial neuron to another. An artificial neuron that receives a signal can process it and also generate additional artificial neurons connected to it.

In common ANN implementations, the signal at a connection between artificial neurons is a real number, and the output of each artificial neuron is computed by some non-linear function of the sum of its inputs. The connections between artificial neurons are called "edges". Artificial neurons and edges typically have a weight that adjusts as learning proceeds. The weight increases or decreases the strength of the signal at a connection. Typically, artificial neurons are aggregated into layers. Different layers may perform different kinds of transformations on their inputs. Signals travel from the first layer (the input layer) to the last layer (the output layer), oftentimes passing through a multitude of hidden layers in-between.

A "cluttered" image of an object is understood as an image wherein some kind of disturbance, in other words nuisance, has been added to. The "clutter" includes, but is not limited to,

- a background behind the object,
- shading,
- blurring,
- rotating, translating, flipping and resizing of the object, and
- partial occlusions of the object.

In the case that the input representation is not textured or coloured - e.g. in the case of a texture-less CAD model -, then random

- surface texture, and
- colour

can be added to the input representation in the sense of clutter, too, respectively.

Images, as well as depth or normal maps, can in principle either be based on a real photo or they can be generated synthetically from models such as computer-aided design (CAD) models. In addition, the clutter can either be the result of a real photograph of the object taken with e.g. some background behind and partly occluded or can be generated artificially. A representation (i.e. an image, a depth map, a normal map, etc.) is referred to as "clean" if it does not contain any clutter.

The encoder sub-network and the decoder sub-network will in the following also be simply referred to as the "encoder" and the "decoder", respectively.

There are many ways to represent an object. For instance, the object may be represented by a depth map, wherein each point (pixel) of the depth map indicates its distance relative to a camera.

The object may also be characterised by a normal map. A normal map is a representation of the surface normals of a three-dimensional (3D) model from a particular viewpoint, stored in a two-dimensional coloured image, also referred to as an RGB (i.e. red colour/ green colour/ blue colour) image. Herein each colour corresponds to the orientation of the surface normal.

Yet another way to represent an object is a lighting map. In a lighting map, each point (pixel) represents the intensity of the light shining on the object at said point.

Yet another way to represent an aspect of the object is a binary mask of the object. A binary mask of an object describes its contour, ignoring heights and depths of said object.

Still another way to represent an aspect of the object is a UV map. UV mapping is the 3D modelling process of projecting a 2D image to a 3D model's surface for texture mapping.

All these representations are referred to as "modalities" in the context of the present application. Each of the modalities is extracted from the same base, namely a plurality of features which are encoded in e.g. a feature vector or a feature map.

Note that the present method is not limited to the specific modalities mentioned above. In principle, any representation can be taken, as long as it can simply be generated from the input models, e.g. the CAD models.

The underlying task of the present invention is to train a network to recognize objects when only texture-less CAD models are available for training. The approach is to first train a generation network to convert cluttered images into clean geometrical representations, which can be used as input for a recognition network which is trained on recognizing objects from such clean geometrical representations. These geometrical representations are also referred to as representations from the synthetic domain.

Examples of such representations are normal maps, depth maps or even a UV map.

The representations should be "clean", i.e. they should not contain any clutter.

The representations should further be discriminative, which means that the representation should contain all the information needed for the task, but, if possible, no more.

Advantageously, the representations are also suited to be regressed from the input domain, i.e. from cluttered images. For instance, it is possible to train a network to regress normal or depth maps from images of an object, as it can use the prior CAD knowledge and the contours of the object to guide the conversion. It would be much harder to regress a representation completely disconnected to the object's appearance, as it is e.g. the case for blueprints.

The present invention discloses a novel generative network. The network is relatively complex but is expected to yield particularly accurate normal maps from the cluttered input images. The network may be described as a "multi-task auto-encoder with self-attentive distillation". Basically, it has the following components:

First, the generation network comprises an encoder sub-network which is designed for extracting meaningful features from the input cluttered images.

Second, the generation network comprises several decoders. Each decoder gets the features from the encoder and has for task to "decode" them into a different modality. For instance, one decoder has for task to extract/recover a normal map from the given features, one decoder has for task to extract/recover a depth map, one decoder has for task to extract/recover the semantic mask, one decoder has for task to extract/recover a lighting map, etc.). By training these decoders together, the network is made more robust, compared to just taking the normal map which is generated in one of the decoders. This is due to synergy as the several decoders are optimized together. This "forces" the encoder to extract as meaningful features as possible which can be used for all tasks.

Third, the generation network comprises a distillation sub-network (which is in the following interchangeably also referred to as "distillation module" or "distillation network") on top of all the decoders. Although one decoder outputting the normal map would seem to be sufficient, it is assumed that the quality of the generative network can be further improved by considering the outputs of the other decoders, too. For instance, the decoder returning the normal map may have failed to properly recover a part of the object, while the depth decoder succeeded. By correlating the results of both decoders, a refined (in other words, "distilled") normal map can be obtained. The correlation of the individual outputs of the several decoders is carried out by the distillation network. It takes for input the results of the decoders, processes them together, and returns a refined normal map.

This distillation module makes use of "self-attentive" layers, which basically help evaluating the quality of each intermediary results to better merge them together. Training the target decoder along others already improves its performance by synergy. However, one can further take advantage of multi-modal architectures by adding a distillation module on top of the decoders, merging their outputs to distil a final result.

Given a feature map

$$x \in \mathbb{R}^{C \times H \times W}$$

the output of the self-attention operation may exemplarily be:

$$x_{sa} = x + \gamma \cdot \sigma\left(\left(W_f * x\right)^{\mathrm{T}} \cdot \left(W_g * x\right)\right) \cdot \left(W_h * x\right)$$

with $\sigma$ the *softmax* activation function; $W_f \in \mathbb{R}^{\bar{C} \times C}$, $W_g \in \mathbb{R}^{\bar{C} \times C}$, $W_h \in \mathbb{R}^{C \times C}$ learned weight matrices (it is opted for $\bar{C} = C/8$); and $\gamma$ a trainable scalar weight.

Instantiating and applying this process to each re-encoded modality, the resulting feature maps are summed up, before decoding them to obtain the final output.

This new distillation process not only allows to pass messages between the intermediary modalities, but also between distant regions in each of them. The distillation network is trained jointly with the rest of the generator, with a final generative loss $L_g$ applied to the distillation results. Not only the whole generator can thus be efficiently trained in a single pass, but no manual weighing of the sub-task losses is needed, as the distillation network implicitly covers it. This is particularly advantageous, as manual fine-tuning is technically possible only when validation data from target domains are available.

Descriptively speaking, the main advantages of the present method are:

- Fully taking advantage of the synthetic data (usually considered as a poor substitute to real data), by generating all these different modalities for multi-task learning;
- Applying the multi-task network to "reverse" domain adaptation (i.e. trying to make real data look synthetic, to help further recognition); and
- Combining together several individual architectural modules for neural networks (e.g. using self-attention layers for the distillation module).

Advantageously, the cluttered images which are given as input to the generation network are obtained from an augmentation pipeline. The augmentation pipeline augments normal or depth maps into a colour image by means of adding clutter to the clean input map. In addition, information is lost as the output of the augmentation pipeline is a two-dimensional colour image instead of a precise 3D representation of the object as input of the augmentation pipeline. The clean normal or depth map of the object may, for instance, be obtained from a CAD model being available of the object.

The generative network as described above may advantageously be used in a method to recover objects from cluttered images.

"Recovering" an object is to be understood as recognizing the class of the object (sometimes also referred to as the "instance" of the object), its pose relative to the camera, or other properties of the object.

The method for recovering an object from an unseen real cluttered image comprises the following steps:

- Generating a representation from the synthetic domain from the cluttered image by means of a generation network which has been trained according to one of the methods described above;
- Inputting the representation from the synthetic domain into a recognition network, wherein the recognition network has been trained to recover objects from representations from the synthetic domain;
- Recovering the object from the representation from the synthetic domain by means of the recognition network; and
- Outputting the result to an output unit.

In other words, the inventive generative network can advantageously be used in combination with a known recognition network. The only requirement of the recognition network is that it has been trained on the discriminative synthetic domain (e.g., the normal map) which the generative network outputs.

As the method of training the generative network is in practice carried out on a computer, the present patent application also claims protection for a corresponding computer program product and a computer-readable storage medium as outlined in the independent claims 8 and 9.

Embodiments of the invention are now described, by way of example only, with the help of the accompanying drawings, of which:

Figure 1    illustrates a method of recovering the class of an object from an unseen real colour image using a generative network according to the invention;

Figure 2    illustrates the recovery process in an abbreviated manner; and

Figure 3    illustrates an embodiment of the inventive generative network in more detail.

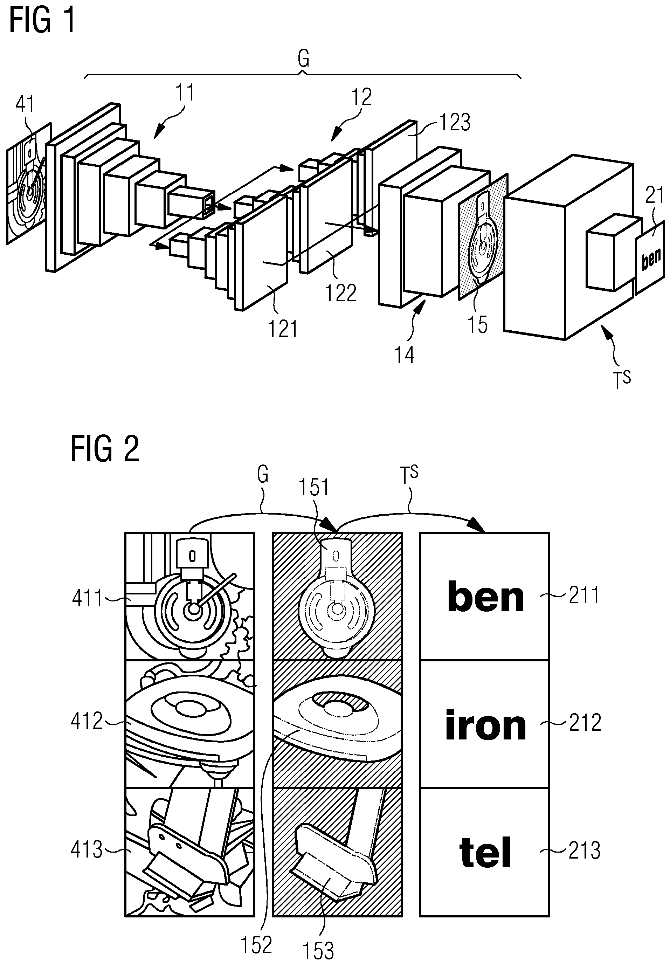

Figure 1 shows an exemplary embodiment of the inventive method of recovering a certain feature of an object from an unseen real cluttered image 41. The method is illustrated by depicting the generative network G and the task-specific recognition network T$^s$, including the corresponding input and output data.

The generative network G comprises one encoder 11, several (here: three) decoders 12 and a distillation network 14. The generative network G receives a real cluttered image 41 and maps it into the synthetic domain. In the example shown in Figure 1, the generative network G returns, for instance, a normal map 15. This normal map 15 is subsequently fed into a recognition network T$^s$. The recognition network is arranged to make a task-specific estimation regarding a predefined property of the object which is depicted in the normal map. One task for the recognition network could be to tell which one of a set of predetermined objects is actually depicted in the normal map (for example, a cat). This task is also referred to as "object classification".

Another exemplary task for the recognition network would be to evaluate whether the cat is shown from the front, the back or from the side. This task is also referred to as "pose estimation".

Yet another task for recognition networks would be to determine how many cats are actually depicted in the image, even if they partially mask, i.e. occlude each other. This task is also referred to as "object counting".

Yet another common exemplary task for a recognition network would be to merely detect objects (single or multiple) on an image, e.g. by defining bounding boxes. This task is also referred to as "object detection".

Thus, the difference between object classification and object detection is that object detection only identifies that there is any object depicted in the image, while the object classification also determines the class (or instance) of the object.

In the example shown in Figure 1, the task of the recognition network T$^s$ is to classify the object. Here, the recognition network T$^s$ correctly states that the object is a bench vise (hence, abbreviated by "ben").

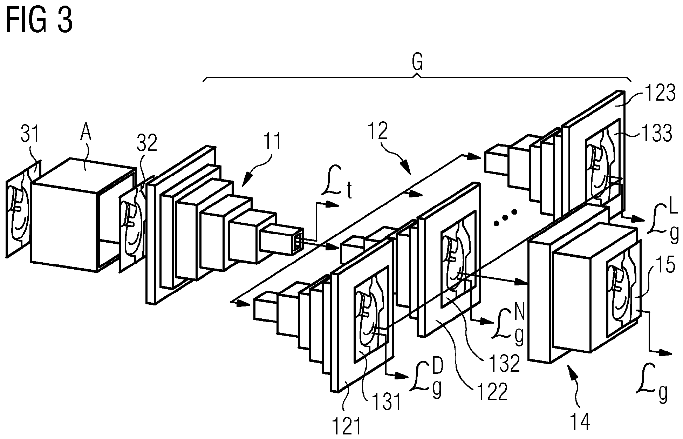

The decoder comprises three individual entities, namely a first decoder sub-network 121, a second decoder sub-network 122 and a third decoder sub-network 123. All three decoder sub-networks 121 - 123 receive the same input, namely the feature vector (or feature map, as the case may be) which has been encoded by the encoder 11. Each decoder sub-network 121 - 123 is an artificial neural network by its own and converts the feature vector into a predefined modality, which will be described and exemplified in more detail in the context of Figure 3.

Figure 2 condenses the pipeline of Figure 1. The left column relates to the real domain and represents three real cluttered colour images, namely a first one depicting a bench vise (first real cluttered image 411), a second image depicting an iron (second real cluttered image 412) and a third image depicting a telephone (third real cluttered image 413). These real cluttered images 411 - 413 are converted into clean normal maps by means of the generation network G. "Clean" normal maps refer to the fact that the objects as such have been successfully segmented from the background. As it is common with normal maps, the orientation of the normal at the surface of the object is represented by a respective colour. The normal maps are depicted in the middle column of Figure 2 (namely, by the first normal map 151, the second normal map 152 and the third normal map 153).

Finally, the output data of the generation network G (i.e. the normal maps 151 - 153) are taken as input for the recognition network T$^s$. The task of the recognition network T$^s$ in the example of Figure 2 is the classification of objects. Thus, the recognition network T$^s$ returns as results a first class 211 "bench vise" (abbreviated by "ben"), a second class 212 "iron" and a third class 213 "telephone" (abbreviated by "tel") .

Figure 3 illustrates the generative network G and, in addition, an augmentation pipeline A which generates (synthetic) augmented data from synthetic input data. The augmented data, which are actually cluttered color images, act as training data for the generation network G.

The synthetic input data of the augmentation pipeline A are synthetic normal maps 31 in the example shown in Figure 3. Alternatively, synthetic normal maps 31 may also be taken as synthetic input data of the augmentation pipeline A.

In the present embodiment, the synthetic normal maps 31 are obtained from texture-less CAD models of the objects to be recovered by the recognition network. A "texture-less" CAD model is understood as a CAD model which only contains pure semantic and geometrical information, but no information regarding e.g. its appearance (color, texture, material type), scene (position of light sources, cameras, peripheral objects) or animation (how the model moves, if this is the case). It will be one of the tasks of the augmentation pipeline to add random appearance or scene features to the clean normal map of the texture-less CAD model. Texture information basically includes the color information, the surface roughness, and the surface shininess for each point of the object's surface. Note that for many 3D models some parts of the objects are only distinguishable because of the changes in the texture information is known for each point of the object's surface.

Hence, recognition of the objects from cluttered colour images are obtained by only reverting to texture-less CAD models of the objects to be recovered.

Figure 3 also illustrates three decoder sub-networks exemplarily in more detail. A first decoder sub-network 121 is designed to extract a depth map 131 from the feature vector provided from the encoder 11; a second decoder sub-network 122 is designed to extract a normal map 132; and a third decoder sub-network 123 is designed to extract a lighting map 133. Although the "task" of the generative network G to return a normal map from the feature vector is in principle already achieved by the second decoder sub-network 122 alone, the inventors of the present invention have recognized that by combining and correlating the results of several sub-networks lead to a more accurate and more robust result. Thus, by virtue of the distillation sub-network 14, a "refined" normal map 15 is obtained. This is achieved among others by optimizing together the respective losses of the intermediary maps, i.e. $L_g^D$ for the depth map 131, $L_g^N$ for the normal map 132 and $L_g^L$ for the lighting map 133. Optionally, a triplet loss $L_t$ directly applied to the feature vector returned from the encoder 11 may be included, too.

**Claims**

1. Method to train a generation network (G) designed for converting cluttered images (32) from the real domain into a representation from the synthetic domain, wherein the generation network (G) comprises an artificial neural network and the method comprises the following steps:

   - receiving a cluttered image (32) as input,
   - extracting a plurality of features from the cluttered image (32, 41) by means of an encoder sub-network (11),
   - decoding the features into a first modality by means of a first decoder sub-network (121),
   - decoding the features into at least a second modality, which is different from the first modality, by means of a second decoder sub-network (122),
   - correlating the first modality and the second modality by means of a distillation sub-network (14), and
   - returning a representation from the synthetic domain as output,

   wherein the artificial neural network of the generation network (G) is trained by optimizing the encoder sub-network (11), the first decoder sub-network (121), the second decoder sub-network (122) and the distillation sub-network (14) together.

2. Method according to claim 1,
   wherein the representation from the synthetic domain is without any clutter.

3. Method according to one of the preceding claims,
   wherein the representation from the synthetic domain is a normal map (15), a depth map or a UV map.

4. Method according to one of the preceding claims,
   wherein the first or second modality is a depth map (131), a normal map (132), a lighting map (133), a binary mask or a UV map.

5. Method according to one of the preceding claims,
   wherein the distillation sub-network (14) comprises a plurality of self-attentive layers.

6. Method according to one of the preceding claims,
   wherein the cluttered image (32) received as input is obtained from a computer-aided design model which has been augmented to a cluttered image (32) by means of an augmentation pipeline (A).

7. Generation network (G) for converting cluttered images (32, 41) into a representation of the synthetic domain, wherein the generation network (G) is an artificial neural network comprising

   - an encoder sub-network (11) which is designed for extracting a plurality of features from the cluttered image (32, 41) given as input to the generation network (G),
   - a first decoder sub-network (121) which is designed for receiving the features from the encoder sub-network (11), decoding them into a first modality,
   - at least a second decoder sub-network (122) which is designed for receiving the features from the encoder sub-network (11), decoding them into a second modality, which is different from the first modality, and
   - a distillation sub-network (14) which is designed for correlating the first and second modalities and output a representation of the synthetic domain.

8. Method to recover an object from a cluttered image (41) by means of an artificial neural network, wherein the method comprises the following steps:

   - generating a representation of the synthetic domain from the cluttered image by means of a generation network (G) which has been trained according to one of the claims 1 to 6,
   - inputting the representation of the synthetic domain into a task-specific recognition network ($T^s$), wherein the task-specific recognition network ($T^s$) has been trained to recover objects from representations of the synthetic domains,
   - recovering the object from the representation of the synthetic domain by means of the recognition network ($T^s$), and
   - outputting the result to an output unit.

9. Recognition system for recovering an object from a cluttered image (41) by means of an artificial network, the recognition system comprising:

   - a generation network (G) which has been trained according to one of the claims 1 to 6,
   - a recognition network ($T^s$) which has been trained to recover objects from representations of the synthetic domain, and
   - an output unit for outputting the results.

10. A computer program product comprising instructions which, when the program is executed by a computer, cause the computer to carry out the steps of the method according to one of the claims 1 to 6.

11. A computer-readable storage medium comprising instructions which, when executed by a computer, cause the computer to carry out the steps of the method of claim according to one of the claims 1 to 6.

# FIG 1

G

41

11

12

123

121

122

14

15

21

ben

TS

# FIG 2

G

151

TS

411

ben — 211

412

iron — 212

413

tel — 213

152   153

FIG 3

Europäisches
Patentamt

European
Patent Office

Office européen
des brevets

# EUROPEAN SEARCH REPORT

Application Number

EP 18 20 8941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TATARCHENKO MAXIM ET AL: "Multi-view 3D Models from Single Images with a Convolutional Network", 16 September 2016 (2016-09-16), IMAGE ANALYSIS AND RECOGNITION : 11TH INTERNATIONAL CONFERENCE, ICIAR 2014, VILAMOURA, PORTUGAL, OCTOBER 22-24, 2014, PROCEEDINGS, PART I; IN: LECTURE NOTES IN COMPUTER SCIENCE , ISSN 1611-3349 ; VOL. 8814; [LECTURE NOTES IN COMPUTER SCIENCE; LECT.NO, XP047355128, ISBN: 978-3-642-17318-9 [retrieved on 2016-09-16] | 1-4,6-11 | INV. G06K9/62 |
| A | * abstract * * page 325, section 3, line 1 - page 328, first paragraph, last line * * page 328, section 4.1, first line - page 329, first paragraph, last line * * figures 1, 2, 3, 5, 4 * ----- | 5 | |
| | | | TECHNICAL FIELDS SEARCHED (IPC) G06K |

The present search report has been drawn up for all claims

| Place of search | Date of completion of the search | Examiner |
|---|---|---|
| The Hague | 23 May 2019 | Sagrebin-Mitzel, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PLANCHE, B. ; WU, Z. ; MA, K. ; SUN, S. ; KLUCK-NER, S. ; CHEN, T. ; HUTTER, A. ; ZAKHAROV, S. ; KOSCH, H. ; ERNST, J.** DepthSynth: Real-Time Realistic Synthetic Data Generation from CAD Models for 2.5D Recognition. *Conference Proceedings of the International Conference on 3D Vision,* 2017